# EUROPÄISCHE PATENTSCHRIFT

(11) **EP 1 711 728 B1**
(45) Veröffentlichungstag und Bekanntmachung des Hinweises auf die Patenterteilung: **14.01.2009**
(21) Anmeldenummer: 04797967.9
(22) Anmeldetag: 18.11.2004
(51) Int. Cl.: F16H 63/32

(54) **SCHALTGABEL**
SELECTOR FORK
FOURCHETTE DE BOITE DE VITESSES

(30) Priorität: 20.12.2003 DE 10360262
(43) Veröffentlichungstag der Anmeldung: 18.10.2006
(73) Patentinhaber: Schaeffler KG, 91074 Herzogenaurach (DE)
(72) Erfinder: BESENBECK, Kurt, 91074 Herzogenaurach (DE); REISSBERGER, Stefan, 96193 Wachenroth (DE); STURM, Stefan, 91613 Martkbergel (DE); ROST, Günter, 91475 Lonnerstadt (DE); HASCHKE, Richard, 91336 Heroldsbach (DE)
(86) Internationale Anmeldenummer: PCT/EP2004/013061
(87) Internationale Veröffentlichungsnummer: WO 2005/064210

(56) Entgegenhaltungen:
- EP-A1- 1 304 512
- DE-A1- 10 125 098
- DE-A1- 10 207 833

## Beschreibung

### Gebiet der Erfindung

Die Erfindung betrifft eine Schaltgabel für ein Stufenwechselgetriebe, entsprechend dem Oberbegriff des Anspruchs 1.

In Stufenwechselgetrieben ist zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Ganges wird die Schiebemuffe in axialer Richtung auf eines der Gangräder zu verschoben, bis die Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Eine Schaltgabel, die zwischen einem Schaltgestänge und der Schiebemuffe angebracht ist, hat die Aufgabe die axiale Bewegung des Schaltgestänges auf die Schiebemuffe zu übertragen. Dazu ist die Schaltgabel entweder axial verschiebbar auf einem Trägerelement, wie beispielsweise einer Schaltschiene, Schaltwelle bzw. Schaltstange, gelagert oder mit diesem fest verbunden. Ein gabelförmiger Grundkörper umgreift die Schiebemuffe in Umfangsrichtung zumindest teilweise und ist an den Enden mit Mitnehmerelementen versehen. Die Mitnehmerelemente der Schaltgabel wirken mit korrespondierenden Mitnehmerelementen an der Schiebemuffe zusammen, worüber eine Verschiebung der Schaltgabel auf die Schiebemuffe übertragen wird.

Eine derartige Schaltgabel ist aus der EP 1 022 492 bekannt. Von einem Befestigungselement, das einen Schaltgabelträger umgreift, erstreckt sich ein Verbindungsteil zu einem halbkreisförmigen Grundkörper. Der Grundkörper ist an seiner Innenseite mit einer umlaufenden Nut versehen, in die ein ringförmiges Mitnehmerelement der Schiebemuffe eingreift. Wird das Befestigungselement in axialer Richtung verschoben ruft das eine axiale Verschiebung des halbkreisförmigen Grundkörpers und damit der Schiebemuffe hervor. Nachteilig wirkt sich in dieser Ausführungsform die massive Bauweise der Schaltgabel und das damit verbundene hohe Gewicht, der hohe Fertigungsaufwand und die hohen Kosten aus.

Zur Lösung dieses Problems schlägt die gattungsgemässe DE 101 25 098 A1 eine Schaltgabel vor, die einen Profilgrundkörper mit einem U-förmigen Querschnitt aufweist, wobei die Schenkel des "U" nach radial außen weisen. Eine weitere gattungsgemäße Schaltgabel ist in DE 102 07 833 offenbart.

### Zusammenfassung der Erfindung

Der Erfindung liegt daher die Aufgabe zugrunde, eine kostengünstig zu produzierende Schaltgabel in Leichtbauweise zu schaffen, die sich dennoch durch hohe Steifigkeit auszeichnet und eine Alternative zu den beschriebenen Schaltgabeln darstellt.

Erfindungsgemäß wird diese Aufgabe dadurch gelöst, dass der aus einem Blechteil gefertigte Grundkörper derart ausgeführt ist, dass er eine Schiebemuffe in deren Umfangsrichtung zumindest teilweise umgreift. Weiterhin ist mindestens ein Bereich des Grundkörpers als Profilkörper ausgeführt. Dabei sind die Ränder des Blechteils, welche in Richtung des Verschiebeweges der Schaltgabel liegen, U-förmig auf die Schiebemuffe zu gebogen. Dadurch wird an der Innenseite des gabelförmigen Grundkörpers im profilierten Bereich eine Führungsnut realisiert, in die ein um den Außenumfang der Schiebemuffe umlaufendes, ringförmiges Mitnehmerelement eingreift. Die Kraftübertragungsflächen, die durch die Schenkel des U-förmigen Profilkörpers definiert sind, stehen zumindest annähernd parallel zu den radial verlaufenden Flächen des ringförmigen Mitnehmerelementes. Wird die Schaltgabel bei einem Schaltvorgang entlang des Verschiebeweges der Schiebemuffe verschoben, so kommt zunächst eine der Kraftübertragungsflächen in Kontakt mit der korrespondierenden radial von der Schiebemuffe abstehenden Fläche des Mitnehmerelementes. Kommt es zu einer weiteren Verschiebung der Schaltgabel, so wird durch diesen Kontakt auch das Mitnehmerelement und damit die Schiebemuffe bewegt.

Als Ausgangsmaterial für eine erfindungsgemäße Schaltgabel dient ein geeigneter Blechzuschnitt. Zuerst werden, beispielsweise mittels eines Walzvorgangs, die gewünschten Profilkörper in den Rohling eingebracht. Anschließend wird der Profilierte Blechstreifen zum gabelförmigen Grundkörper gebogen und mit einem Trägerteil, wie einer Führungshülse, einer Schaltstange oder Schaltschiene verbunden. Die Verwendung eines Blechteils senkt im Vergleich zur massiven Ausführungsform das Gewicht der Schaltgabel signifikant. Ein weiterer Vorteil sind die in der Massenproduktion niedrigen Herstellungskosten durch ein spanloses Umformverfahren. Weiterhin können auf diesem Weg auch kompliziertere Profile in den Grundkörper eingebracht werden, um die Steifigkeit zu erhöhen.

In einer vorteilhaften Weiterbildung der Erfindung sind die zur Schiebemuffe gewandten Flächen des U-förmigen Profilkörpers mit einer Gleitbeschichtung versehen. Denkbar sind Metall- bzw. Metallegierungen, beispielsweise Molybdän-, CoMoSi-, Nickel-Graphit-, Bronze- oder Messingschichten, die mittels eines Spritzverfahrens, vorzugsweise mittels eines Flamm-, Lichtbogen- oder Plasmaspritzverfahrens, aufgebracht sind. Ebenso denkbar ist der Einsatz von Plattierverfahren, wie Schweiß- oder Walzplattieren, um die Gleitschichten aufzubringen. Weiterhin kann die Gleitbeschichtung als Kunststoffschicht ausgeführt sein, wobei der Kunststoff beispielsweise eine Polyamidverbindung ist und mittels eines Spritzgussverfahrens aufgebracht ist.

Während des Betriebs des Kraftfahrzeuges treten häufig rotative Relativbewegungen zwischen der Schiebemuffe, die sich um ihre Längsachse dreht, und der Schaltgabel auf. Als Konsequenz bewegt sich das ringförmige Mitnehmerelement, welches drehfest mit der Schiebemuffe verbunden ist, durch die Führungsnut, die durch den profilierten Bereich gebildet wird. Die dadurch hervorgerufene Reibung erhöht den Kraftstoffverbrauch und verringert die Lebensdauer der Komponenten. Um diesen unerwünschten Effekt zu minimieren wird die Schaltgabel im Bereich der Kontaktzonen mit einer Gleitbeschichtung versehen. Dabei können geeignete Metall- oder Metalllegierungsschichten oder Kunststoffschichten verwendet werden. Beispielhaft werden hier Molybdän-, Bronze-, Messing-, CoMoSi- oder Nickel-Graphitschichten genannt, die in Verbindung mit Stahl als Reibpartner niedrige Reibungskoeffizienten aufweisen. Die Schichten können mittels Plattier- oder Spritzverfahren aufgebracht werden.
Eine weitere Möglichkeit stellt das Aufbringen von Kunststoffschichten, vorzugsweise Polyamidkunststoffschichten, dar. Diese Materialien können beispielsweise mittels eines Spritzgussverfahrens aufgebracht werden. Vorteil dieses Verfahrens ist, dass wegen der Genauigkeiten dieser Technik diese Schichten zum Toleranzausgleich verwendet werden können. Ungenauigkeiten bei der Produktion können beispielsweise durch Materialverzug beim Anbringen eines Trägers, wie beispielsweise einer Schaltschiene oder eines Führungsauges, an den Grundkörper mittels einer Schweißverbindung auftreten. Die daraus resultierende erhöhte Reibung und der damit verbundene höhere Verschleiß können dadurch eliminiert werden, dass die Ausrichtungsfehler durch die Kunststoffschicht ausgeglichen werden.

Ein weiterer Vorteil dieser erfindungsgemäßen Ausführungsform einer Schaltgabel besteht darin, dass beim Aufspritzen von Metallen oder Metallegierungen auf die Innenwandung der mindestens einen Führungsnut der Bereich des Grundkörpers, an dem ein Träger befestigt werden soll, nicht mit dem aufzubringenden Materialien kontaminiert wird. Ist eine Schweißverbindung zwischen Träger und Grundkörper vorgesehen, so ist keine kosten- und arbeitsintensive spanende Nachbearbeitung nötig um die Verbindungsstelle von den dort unbeabsichtigt aufgebrachten Metallen bzw. Metallegierungen zu befreien.

In einer bevorzugten Ausführungsform sind zwei Enden des gabelförmigen Grundkörpers als zur Schiebemuffe hin offene U-förmige Profilkörper ausgebildet.

Die mit einem ihren Außenumfang umfassenden, ringförmigen Mitnehmerelement versehene Schiebemuffe wird von dem gabelförmigen Grundkörper teilweise umgriffen. Die Enden des Grundkörpers sind als zur Schiebemuffe hin offene U-förmige Profilkörper ausgebildet. Dabei sind der Grundkörper und die U-förmigen Profile derart ausgeführt, dass das ringförmige Mitnehmerelement nur mit der durch die Profilkörper gebildeten ersten und zweiten Führungsnut in Kontakt treten kann. Der Bereich zwischen den Profilkörpern kann mit Strukturen versehen werden, die die Steifigkeit des Grundkörpers erhöhen. Denkbar sind hier L- oder ebenfalls U-förmige zweite Profilkörper, oder ein im Schnitt nach einer Seite teilweise offenes oder ganz geschlossenes Vierkantprofil. Die Strukturen sind derart ausgebildet sind, dass sie nicht in Reibkontakt mit der Schiebemuffe und dem Mitnehmerelement treten können.

In einer vorteilhaften Weiterbildung dieser Ausführungsform ist zusätzlich ein mittlerer Abschnitt zwischen den zwei Enden des gabelförmigen Grundkörpers als zur Schiebemuffe hin offener U-förmiger Profilkörper ausgebildet.

Der Profilkörper des dritten Bereichs bildet eine dritte Führungsnut aus und ist derart ausgeführt, dass das Mitnehmerelement der Schiebemuffe zusätzlich in diese dritte Führungsnut eingreift. Die dritte Führungsnut ist vorteilhafterweise in einem Bereich des Grundkörpers ausgebildet, der zu beiden Enden des Grundkörpers ungefähr gleich beabstandet ist. Vorteilhafterweise ist an diesem Bereich auch der Träger, beispielsweise eine Schaltschiene oder ein Führungsteil zur Aufnahme einer Schaltschiene, -welle oder -stange, angebracht. Durch den dritten Profilkörper wird ein dritter Angriffspunkt zur Kraftübertragung von der Schaltgabel auf die Schiebemuffe eingeführt, wodurch die auf die Schaltgabel wirkenden Kräfte und Momente reduziert werden.

Eine weitere Ausführungsform einer Schaltgabel ist dadurch gekennzeichnet, dass der gesamte Grundkörper als zur Schiebemuffe hin offener U-förmiger Profilkörper ausgebildet ist.

In dieser Ausführungsform sind die in Bewegungsrichtung der Schaltgabel weisenden Enden des Blechteils auf seiner gesamten Länge zur Schiebemuffe hin gebogen. Dadurch wird eine an der der Schiebemuffe zugewandten Seite des Grundkörpers umlaufende, ununterbrochene Führungsnut für den Eingriff des Mitnehmerelements der Schiebemuffe geschaffen. Bei Verschiebungen der Schaltgabel und damit der Schiebemuffe verteilen sich die wirkenden Kräfte auf den gesamten Grundkörper.

Vorteilhafterweise trägt die Ausbildung des Grundkörpers als Profilkörper in den erfindungsgemäßen Ausführungsformen zur Versteifung der Schaltgabel bei. Die Ausführung als zum Schaltmaul offener U-förmige Profilkörper erlaubt es die Anzahl und die Lage der Kontaktflächen zwischen Schaltgabel und Schiebemuffe der jeweiligen Anwendungssituation anzupassen, wodurch Torsions- oder Widerstandsmomente minimiert werden können. Zusammengenommen läßt dies den Einsatz von Dünnblech zu. Die Profilierung verleiht der Schaltgabel im Vergleich zu unprofilierten Schaltgabeln eine hohe Steifigkeit, während verteilte Kontaktflächen die Kräfte gleichmäßig auf die Schaltgabel verteilen. Aus dem Einsatz von Dünnblech resultieren Vorteile, wie Produktionskostensenkung, geringere Taktzeiten in der Massenproduktion und Gewichtsreduzierung des Bauteils.

Ein erfindungsgemäßes Schaltkupplungselement für ein Stufenwechselgetriebe ist mit einer Schiebemuffe, die einen Muffenkörper und ein an dessen Umfang ringförmig umlaufendes Mitnehmerelement aufweist, versehen. Das Mitnehmerelement ist verdrehfest am Außenumfang des Muffenkörpers angebracht und weist zwei im Wesentlichen radial verlaufende Führungsflächen auf. Weiterhin ist eine in den vorangegangenen Abschnitten beschriebene erfindungsgemäße Schaltgabel vorgesehen, wobei das Mitnehmerelement in dem zumindest einen als Profilkörper ausgebildeten Bereich von diesem übergriffen wird. Der Grundkörper ist zumindest teilweise als U-förmiger Profilkörper ausgebildet. Dabei ist der Profilkörper derart ausgestaltet, dass er zur Schiebemuffe offen ist. Die Schiebemuffe ist mit einem an deren Umfang ringförmig umlaufenden Mitnehmerelement versehen, welches von dem Profilkörper des Grundkörpers übergriffen wird. Das Mitnehmerelement kann beispielsweise als massiver Ring oder als Winkelhülse ausgeführt sein. Weiterhin ist denkbar, dass sich das Mitnehmerelement in axialer Richtung über die gesamte Schiebemuffe oder nur über einen Teil der Schiebemuffe erstreckt, einteilig mit dem Muffenkörper ausgeführt oder als separates Bauteil gefertigt und am Muffenkörper befestigt ist. Durch diese Ausführung des Schaltkupplungselementes werden die Kosten der Schiebemuffe erheblich reduziert, da wesentlich einfachere oder weniger Mitnehmerelemente auf den Außenumfang des Muffenkörpers aufgebracht werden müssen.

### Kurze Beschreibung der Zeichnungen

Weitere Merkmale der Erfindung ergeben sich aus der nachfolgenden Beschreibung und aus der Zeichnung, in der zwei Ausführungsbeispiele der Erfindung vereinfacht dargestellt sind. Es zeigen:
- Figur 1: eine perspektivische Ansicht einer ersten Ausführungsform einer erfindungsgemäßen Schaltgabel,
- Figur 2: eine perspektivische Ansicht einer zweiten Ausführungs-form einer erfindungsgemäßen Schaltgabel,
- Figur 3: eine perspektivische Ansicht des Grundkörpers der zweiten Ausführungsform einer erfindungsgemäßen Schaltgabel,
- Figur 4: eine perspektivische Ansicht eines erfindungsgemäßen Schaltkupplungselements mit einer Schaltgabel mit Führungsnut, in die ein Mitnehmelement einer ebenfalls dargestellten Schiebemuffe eingreift.

### Ausführliche Beschreibung der Zeichnungen

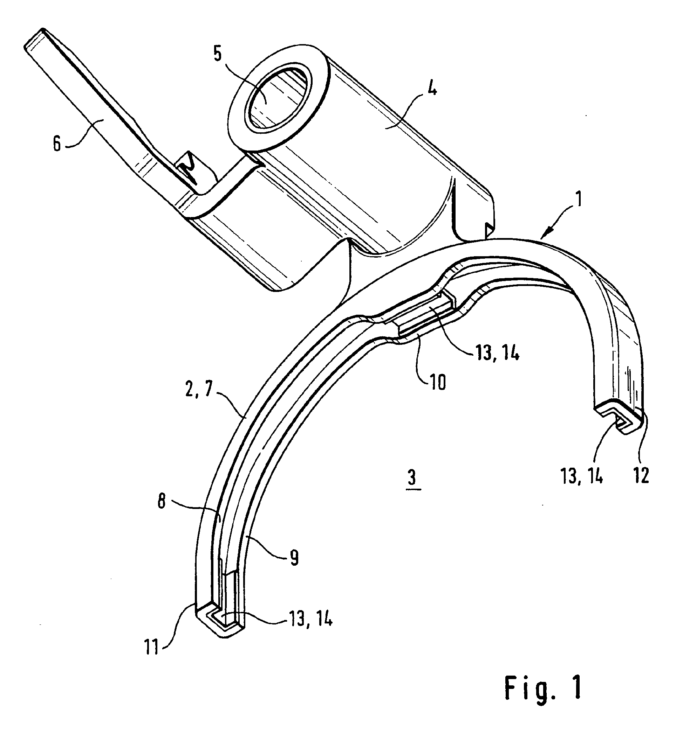

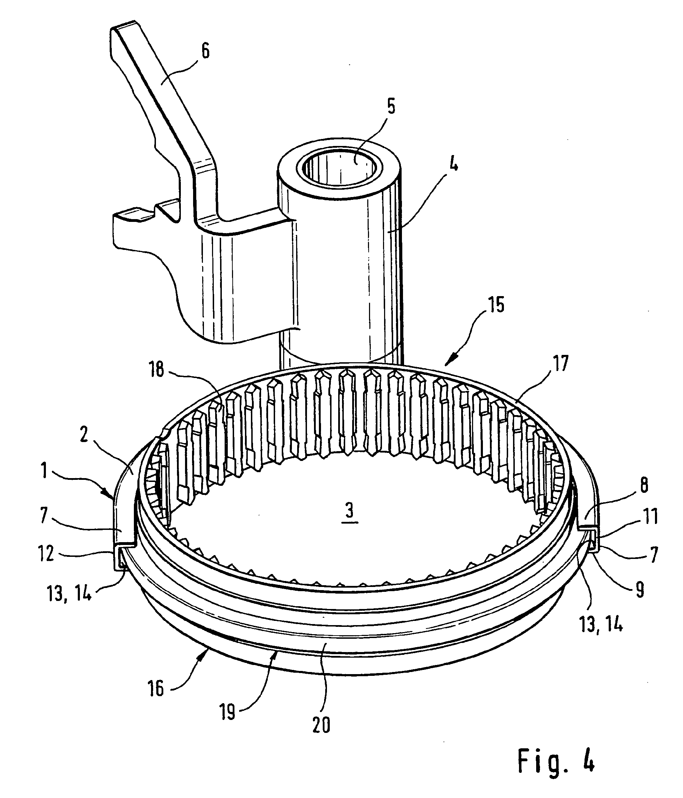

Figur 1 zeigt eine erste Ausführungsform einer erfindungsgemäßen Schaltgabel 1. Mit 2 ist ein gabelförmig ausgestalteter Grundkörper bezeichnet. Der Grundkörper 2 bildet ein Schaltmaul 3, in das eine Schiebemuffe 16 (Figur 4) eingreifen kann. Der Grundkörper 2 umgreift im eingebauten Zustand die Schiebemuffe 16 umfangsseitig zumindest teilweise und ist mit einer Führungshülse 4 versehen. In die Führungshülse 4 ist ein Gleitlager 5 eingebracht, über die die Schaltgabel 1 auf einer nicht dargestellten Schaltstange bzw. einer Schaltwelle axial verschiebbar und gegebenenfalls drehbar gelagert ist. Ebenfalls denkbar wäre an dieser Stelle eine Lagerung über ein Linearwälzlager oder ein Radial-Linearwälzlager. Auch eine direkte Verbindung mit einer Schaltschiene liegt im Bereich des Erfindungsgedankens. An der Führungshülse 4 ist ein Schaltarm 6 angebracht. Die Führungshülse 4 ist mit dem Grundkörper 2 und dem Schaltarm 6 beispielsweise mittels Schweiß- oder Klebverbindungen verbunden.

Der Grundkörper 2 ist als zum Schaltmaul 3 offener U-förmiger Profilkörper 7 ausgebildet, der aus zwei im Wesentlichen parallelen Schenkeln 8 und 9 besteht, die an der vom Schaltmaul abgewandten Seite miteinander verbunden sind. Der Profilkörper 7 bildet mindestens eine Führungsnut 13 aus, in die ein Mitnehmerelement 20 einer Schiebemuffe 16 eingreifen kann.

In dieser speziellen Ausführungsform einer erfindungsgemäßen Schaltgabel 1 sind die Schenkel 8 und 9 des U-förmigen Profilkörpers 7 im Bereich eines mittleren Abschnitts 10 des Grundkörpers 2 länger ausgeführt als am übrigen Grundkörper 2. Das zum Schaltmaul 3 hin offene U-förmige Profil im mittleren Abschnitt 10 und an den Enden 11 und 12 des Gabelförmigen Grundkörpers 2 bildet die Führungsnuten 13, welche dazu vorgesehen sind ein Mitnehmerelement 20 einer Schiebemuffe 16 zu übergreifen. Der Grundkörper 2 und der Profilkörper 7 sind derart ausgeführt, dass das Mitnehmerelement 20 einer Schiebemuffe 16 ausschließlich in die Führungsnuten 13 des mittleren Abschnitts 10 und der Enden 11 und 12 eingreift. Natürlich ist die Erfindung nicht auf den Einsatz von drei Führungsnuten 13 beschränkt. Je nach Anwendung können beliebig viele Abschnitte des Grundkörpers 2 derart mit einem zum Schaltmaul 3 offenen U-förmigen Profilkörper 7 versehen werden, so dass ein Mitnehmerelement 20, welches an einer Schiebemuffe 16 ausgebildet ist, in die dadurch gebildeten Führungsnuten 13 eingreift.

Um die Steifigkeit de Schaltgabel zu erhöhen sind die Abschnitte des Grundkörpers 2 zwischen den Enden 11 und 12 und dem mittleren Abschnitt 10 ebenfalls als U-förmige Profilkörper 7 ausgeführt. Denkbar sind für diese Bereiche natürlich auch andere Profilausführungen, wie beispielsweise L-förmige bzw. geschlossene Profile.

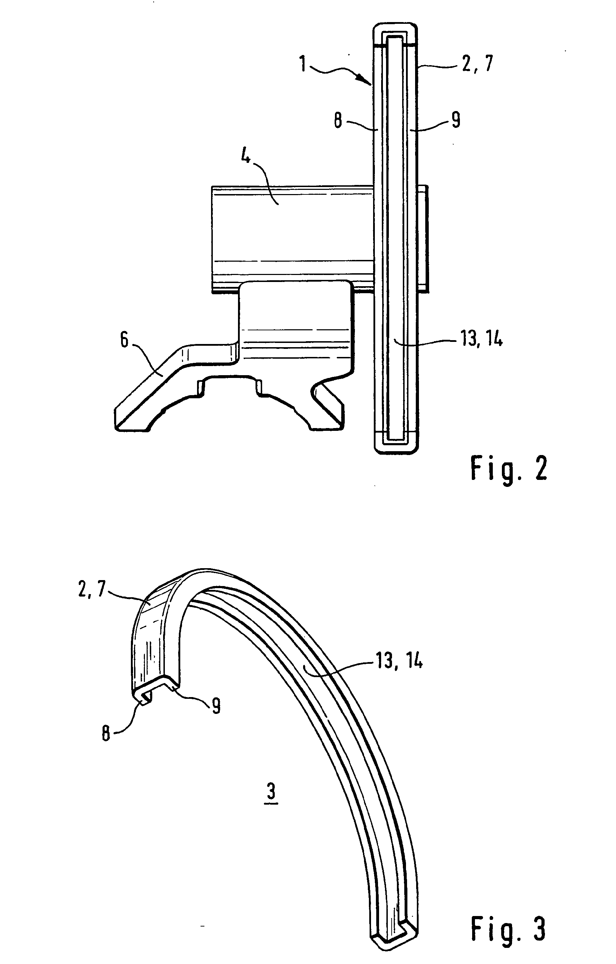

In Figur 2 und Figur 3 ist eine weitere Ausführungsform einer erfindungsgemäßen Schaltgabel 1 dargestellt. Mit 2 ist wiederum ein Grundkörper bezeichnet, der gabelförmig ausgeführt ist und ein Schaltmaul 3 bildet. Der Grundkörper 2 ist wiederum als ein zum Schaltmaul 3 offener U-förmiger Profilkörper 7 ausgeführt. Der U-förmige Profilkörper 7 bildet eine entlang des gesamten Grundkörpers 2 umlaufende Führungsnut 13, die ein Mitnehmerelement 20 einer Schiebemuffe 16 entlang des gesamten Grundkörpers 2 übergreift.

Am Grundkörper 2 ist eine Führungshülse 4 zur Aufnahme einer nicht dargestellten Schaltstange oder Schaltwelle befestigt. An der Führungshülse 4 ist ein Schaltarm 6 angebracht. Die Verbindungen zwischen Schaltarm 6, Führungshülse 4 und Grundkörper 2 können beispielsweise durch Schweiß- oder Klebverbindungen hergestellt sein. In die Führungshülse 4 ist ein Gleitlager 5 eingebracht, worüber die Schaltgabel auf einer nicht dargestellten Schaltstange bzw. Schaltwelle axial verschiebbar und gegebenenfalls drehbar gelagert ist. Selbstverständlich kann der Grundkörper 2 auch direkt mit einer Schaltschiene verbunden werden. Ebenfalls möglich ist statt des Gleitlagers 5 ein Linearwälzlager oder ein Radial-Linearwälzlager zu verwenden.

Vorteil dieser Ausführungsform ist, dass bei einer axialen Verschiebung der Schaltgabel 1 die Kraftübertragung auf die Schiebemuffe 16 entlang des gesamten Grundkörpers 2 erfolgt, wodurch höhere Torsions- und Widerstandsmomente aufgenommen werden können. Ein weiterer Vorteil ergibt sich daraus, dass durch die Ausformung des Grundkörpers 2 als Profilkörper 7 die Steifigkeit der Schaltgabel 1 deutlich erhöht wird.

Der Grundkörper 2 beider Ausführungsformen ist in einem spanlosen Umformprozess einteilig aus einem Blechteil hergestellt. Als Ausgangsmaterial dient ein entsprechender Blechzuschnitt, beispielsweise Bandmaterial, welches auf die entsprechende Größe abgelängt wird. Anschließend kann das U-Profil eingewalzt werden, worauf sich ein Arbeitsschritt anschließt, in dem in einem Biegevorgang die gabelförmige Gestalt des Grundkörpers 2 hergestellt wird. Die Ausführung des Grundkörpers 2 als Profilkörper 7 ermöglicht den Einsatz von Dünnblech, bei gleichzeitig hoher Steifigkeit der Schaltgabel 1. Dies führt zu einer signifikanten Gewichtsreduzierung des Bauteils, zu einer Reduzierung der bei der Umformung einzusetzenden Kräfte, einer Senkung der Taktzeiten und damit zu einer signifikanten Kostenreduzierung in der Massenproduktion.

In den Bereichen der Führungsnuten 13, in die das Mitnehmerelement 20 der Schiebemuffe 16 eingreift, ist der U-förmige Profilkörper 7 mit einer Gleitbeschichtung 14 versehen. Die Gleitbeschichtung 14 überdeckt den inneren Bereich des U-förmigen Profilkörpers 7 zumindest in den Bereichen der Führungsnuten 13, in denen der Grundkörper 2 in Reibkontakt mit der Schiebemuffe 16 steht. Als Gleitbeschichtung 14 sind geeignete Metall- bzw. Metallegierungsschichten vorgesehen, beispielsweise Messing-, Bronze-, Nickel-Graphit-, CoMoSi- oder Molybdänschichten. Die Schichten können in einem Plattier- oder Spritzverfahren aufgebracht werden. Beispielhaft sind hierzu Flamm-, Lichtbogen- oder Plasmaspritzverfahren und Schweiß- oder Walzplattieren genannt.

In einer vorteilhaften Weiterbildung der Erfindung ist die Gleitbeschichtung 14 als Kunststoffschicht, vornehmlich aus einer Polyamidverbindung, ausgeführt. Die Kunststoffschicht ist in einem Spritzgußverfahren aufgebracht und kann dazu genutzt werden fertigungsbedingte Toleranzen auszugleichen.

In Figur 4 ist ein erfindungsgemäßes Schaltkupplungselement 15 mit einer erfindungsgemäßen Schaltgabel 1 und einer Schiebemuffe 16 dargestellt. Die Schiebemuffe 16 besteht aus einem Muffenträger 17 in den eine Innenverzahnung 18 eingebracht ist. Die einzelnen Zähne der Innenverzahnung 18 sind mit Hinterschnitten und Dachschrägen versehen. Der Muffenträger 17 ist als kreisrund gebogenes Flachmaterial ausgeführt, in welches die Innenverzahnung 18 eingebracht ist, wobei dessen aneinanderstoßenden Enden miteinander befestigt sind. Am Außenumfang des Muffenträgers 17 ist ein ringförmig um den Muffenträger 17 umlaufendes Ringelement 19 angebracht. Vom Außenumfang des Ringelementes 19 erstreckt sich ein kreisförmig um dieses umlaufendes, ringförmiges Mitnehmerelement 20 in radialer Richtung nach außen. Das Mitnehmerelement 20 kann einteilig mit dem Ringelement 19 ausgeführt oder ein separat gefertigtes Bauteil sein. Ebenso anwendbar sind alle anderen Ausführungsformen von Schiebemuffe, wie massive Ausführungsformen oder dergleichen. Das ringförmige Mitnehmerelement 20 kann beispielsweise als ein massiver Ring oder eine Winkelhülse ausgeführt sein, die mittels Form- oder Kraftschluß oder anderen Verbindungsarten, wie Schweiß- oder Klebverbindungen, am Außenumfang des Ringelementes 19 angebracht sind. Ebenso ist es denkbar das Mitnehmerelement 20 einteilig mit dem Ringelement auszuführen. Das Mitnehmerelement 20 kann sich in axialer Richtung ganz oder teilweise über die gesamte Schiebemuffe 16 erstrecken.

Die erfindungsgemäße Schaltgabel 1 besteht aus einem gabelförmig ausgebildeten Grundkörper 2 der ein Schaltmaul 3 bildet, einer an dem Grundkörper 2 befestigten Führungshülse 4 und einem an der Führungshülse 4 befestigten Schaltarm 6. Die Verbindungen zwischen Schaltarm 6, Führungshülse 4 und Grundkörper 2 sind beispielsweise als Schweiß- oder Klebverbindungen ausgeführt. In die Führungshülse 4 ist ein Gleitlager 5 eingebracht, worüber die Schaltgabel auf einer Schaltstange, Schaltwelle oder Schaltschiene gelagert ist. Denkbar wäre auch eine direkte Schweiß- oder Klebeverbindung zwischen dem Grundkörper und einer Schaltschiene. Der Grundkörper 2 umgreift die Schiebemuffe 16 zumindest teilweise, wobei der zum Schaltmaul 3 offene U-förmige Profilkörper 7 das Mitnehmerelement 20 im Bereich der Enden 11 und 12 und des mittleren Abschnitts 10 übergreift. Die Schenkel 8 und 9 des U-förmigen Profilkörpers 7 stehen in diesen Bereichen den radial verlaufenden Flächen des Mitnehmerelements 20 gegenüber. Bei einer Verschiebung der Schaltgabel 1 kommen zunächst die Innenflächen eines der Schenkel 8 oder 9 mit der radial verlaufenden Fläche des Mitnehmerelements 20 in Kontakt. Bei weiterer Verschiebung wird über diese Kontaktflächen eine Kraft auf die Schiebemuffe 16 übertragen, wodurch diese ebenfalls in ihre axiale Richtung verschoben wird. Natürlich kann auch die Ausführungsform einer erfindungsgemäßen Schaltgabel 1, deren Führungsnut 13 entlang des gesamten Grundkörpers 2 umläuft und das Mitnehmerelement 20 der Schiebemuffe 16 auf der gesamten Länge des Grundkörpers übergreift, eingesetzt werden.

An den Enden 11 und 12 und im mittleren Abschnitt 10 steht das Mitnehmerelement 20 in ständigem Eingriff mit den Führungsnuten 13. Die dadurch gebildeten Reibkontakte führen zu einem erhöhten Kraftstoffverbrauch und höherem Verschleiß der Schiebemuffe 16 und der Schaltgabel 1. Um dies zu verhindern sind in dem Bereich der Kontaktzonen Gleitbeschichtungen 14 vorgesehen. Als Gleitbeschichtung 14 sind geeignete Metall- bzw. Metallegierungsschichten vorgesehen, beispielsweise Messing-, Nickel-Graphit-, Bronze-, CoMoSi- oder Molybdänschichten. Die Schichten können in einem Plattier- oder Spritzverfahren in die Führungsnuten 13 aufgebracht werden. Beispielhaft sind hierzu Flamm-, Lichtbogen- oder Plasmaspritzverfahren und Schweiß- oder Walzplattieren genannt.

Ebenfalls denkbar sind geeignete Kunststoffschichten, insbesondere Polyamidverbindungen, welche vorteilhafterweise in einem Spritzgussverfahren aufgebracht werden. Die im Spritzgussverfahren aufgebrachten Kunststoffschichten können derart ausgebildet werden, dass Fertigungstoleranzen die beispielsweise beim Bilden der Schweißverbindungen zwischen Grundkörper 2, Führungshülse 4 und Schaltarm 6 auftreten, ausgeglichen werden. Dadurch wird die Laufruhe der Schiebemuffe 16 in den Führungsnuten 13 der Schaltgabel 1 erhöht und die Reibung minimiert.

### Bezugszahlenliste

- 1: Schaltgabel
- 2: Grundkörper
- 3: Schaltmaul
- 4: Führungshülse
- 5: Gleitlager
- 6: Schaltarm
- 7: Profilkörper
- 8: Schenkel
- 9: Schenkel
- 10: Abschnitt
- 11: Ende
- 12: Ende
- 13: Führungsnut
- 14: Gleitbeschichtung
- 15: Schaltkupplungselement
- 16: Schiebemuffe
- 17: Muffenträger
- 18: Innenverzahnung
- 19: Ringelement
- 20: Mitnehmerelement

## Patentansprüche

1. Schaltgabel (1) für ein Stufenwechselgetriebe mit einem gabelförmig ausgebildeten Grundkörper (2), der als ein einteilig ausgeführtes, aus einem spanlosen Umformprozess hergestelltes Blechteil ausgebildet ist, wobei der Grundkörper (2) ein Schaltmaul (3) zum Eingriff in eine Schiebemuffe (16) aufweist, **dadurch gekennzeichnet, dass** der Grundkörper (2) zumindest in Bereichen, in denen er die Schiebemuffe umgreift, als ein zum Schaltmaul (3) hin offener, U-förmiger Profilkörper (7) ausgebildet ist, der aus zwei im Wesentlichen parallele Schenkel (8, 9) besteht, die an der vom Schaltmaul (3) abgewandten Seite miteinander verbunden sind, um über die Innenflächen der Schenkel (8, 9) ein Mitnehmerelement (20) der Schiebemuffe (16) zu führen, und wobei der gesamte Grundkörper (2) als zur Schiebemuffe hin offener U-förmiger Profilkörper (7) ausgebildet ist.

2. Schaltgabel (1) nach Anspruch 1, **dadurch gekennzeichnet, dass** die zur Schiebemuffe gewandten Flächen des U-förmigen Profilkörpers (7), mit einer Gleitbeschichtung (14) versehen sind.

3. Schaltgabel (1) nach Anspruch 2, **dadurch gekennzeichnet, dass** die Gleitbeschichtung (14) aus einem Material besteht, welches aus der Gruppe Molybdän, Bronze, Messing, Nickel-Graphit und CoMoSi ausgewählt ist.

4. Schaltgabel (1) nach Anspruch 3, **dadurch gekennzeichnet, dass** die Gleitbeschichtung (14) mittels eines Plattierverfahrens aufgebracht ist.

5. Schaltgabel (1) nach Anspruch 3, **dadurch gekennzeichnet, dass** die Gleitbeschichtung (14) mittels eines thermischen Spritzverfahrens aufgebracht ist.

6. Schaltgabel (1) nach Anspruch 2, **dadurch gekennzeichnet, dass** die Gleitbeschichtung (14) eine Kunststoffschicht ist.

7. Schaltgabel (1) nach Anspruch 6, **dadurch gekennzeichnet, dass** die Kunststoffschicht aus einer Polyamidverbindung besteht.

## Claims

1. Gearshift fork (1) for a multi-step gear transmission, said gearshift fork (1) comprising a fork-shaped base body (2) that is configured as a one-piece sheet metal part made by shaping without chip removal, the base body (2) forming a gearshift jaw (3) for engaging into a sliding sleeve (16), **characterised in that** the base body (2), at least in regions where it surrounds the sliding sleeve, is configured as a U-shaped profiled body (7) that is open towards the gearshift jaw (3), the profiled body (7) consists of two substantially parallel legs (8, 9) that are connected to each other on the side turned away from the gearshift jaw (3) for guiding an entraining element (20) of the sliding sleeve (16) by means of the inner surfaces of the legs (8, 9), and the entire base body (2) is configured as a U-shaped profiled body (7) that is open towards the sliding sleeve.

2. Gearshift fork (1) according to claim 1, **characterised in that** the surfaces of the U-shaped profiled body (7) facing the sliding sleeve are provided with a sliding coating (14).

3. Gearshift fork (1) according to claim 2, **characterised in that** the sliding coating (14) is made of a material chosen from the group consisting of molybdenum, bronze, brass, nickel graphite and CoMoSi.

4. Gearshift fork (1) according to claim 3, **characterised in that** the sliding coating (14) is applied by means of a plating method.

5. Gearshift fork (1) according to claim 3, **characterised in that** the sliding coating (14) is applied by means of a thermal spray-coating method.

6. Gearshift fork (1) according to claim 2, **characterised in that** the sliding coating (14) is a plastic layer.

7. Gearshift fork (1) according to claim 6, **characterised in that** the plastic layer is made of a polyamide compound.

## Revendications

1. Fourchette (1) de changement de vitesse pour un engrenage réducteur échelonné, ladite fourchette de changement de vitesse comprenant un corps (2) de base bifurqué configuré en une seule pièce en étant fabriqué sous la forme d'une pièce en tôle sans enlèvement de copeaux, le corps (2) de base comprenant une mâchoire (3) de changement de vitesse pour l'engagement dans un manchon coulissant (16), **caractérisée en ce que** le corps (2) de base, au moins, dans les régions où il entoure le manchon coulissant, est configuré sous la forme d'un corps profilé (7) en forme de U qui est ouvert vers la mâchoire (7) de changement de vitesse, ledit corps profilé (7) étant composé de deux bras (8, 9) globalement parallèles, l'un à l'autre, qui, du côté détourné de la mâchoire (3) de changement de vitesse sont reliés, l'un à l'autre, pour guidé au moyen des surfaces internes des bras (8, 9), un élément (20) entraîneur du manchon coulissant (16), et **en ce que** le corps (2) de base entier est configuré sous la forme d'un corps profilé (7) en forme de U qui est ouvert vers le manchon coulissant.

2. Fourchette (1) de changement de vitesse selon la revendication 1, **caractérisée en ce que** les surfaces du corps profilé (7) en forme de U qui font face au manchon coulissant sont munies d'un revêtement de glissement (14).

3. Fourchette (1) de changement de vitesse selon la revendication 2, **caractérisée en ce que** le revêtement de glissement (14) en fait en une matière choisie dans le groupe consistant de molybdène, de bronze, de laiton, de graphite de nickel et de CoMoSi.

4. Fourchette (1) de changement de vitesse selon la revendication 3, **caractérisée en ce que** le revêtement de glissement (14) est appliqué par une méthode de placage.

5. Fourchette (1) de changement de vitesse selon la revendication 3, **caractérisée en ce que** le revêtement de glissement (14) est appliqué par une méthode de projection thermale.

6. Fourchette (1) de changement de vitesse selon la revendication 2, **caractérisée en ce que** le revêtement de glissement (14) est une couche en matière synthétique.

7. Fourchette (1) de changement de vitesse selon la revendication 6, **caractérisée en ce que** la couche en matière synthétique est faite en un composé de polyamide.
